# EUROPÄISCHE PATENTSCHRIFT

(11) **EP 1 586 103 B1**
(45) Veröffentlichungstag und Bekanntmachung des Hinweises auf die Patenterteilung: **15.08.2007**
(21) Anmeldenummer: 04729427.7
(22) Anmeldetag: 26.04.2004
(51) Int. Cl.: H01H 39/00

(54) **GEHÄUSEAUSFÜHRUNG FÜR EINE PYROMECHANISCHE TRENNVORRICHTUNG**
HOUSING CONFIGURATION FOR A PYROMECHANICAL DISCONNECTING DEVICE
CONFIGURATION DU LOGEMENT D'UN DISPOSITIF DE COUPURE PYROMECANIQUE

(30) Priorität: 30.04.2003 DE 10319750; 05.03.2004 DE 102004010745
(43) Veröffentlichungstag der Anmeldung: 19.10.2005
(73) Patentinhaber: Delphi Technologies, Inc., Troy, MI 48007 (US); Gessmann GmbH & Co. KG, 74211 Leingarten (DE)
(72) Erfinder: VON BEHR, Diedrich, 91054 Erlangen (DE); BREDE, Uwe, 90765 Fuerth (DE); KORDEL, Gerhard, 90455 Nuernberg-Kornburg (DE); NEUSER, Jürgen, 74348 Lauffen (DE); SEITZ, Wolfgang, 74211 Leingarten (DE); KNAUSS, Jürgen, 90587 Obermichelbach (DE)
(74) Vertreter: Manitz, Finsterwald & Partner GbR
(86) Internationale Anmeldenummer: PCT/EP2004/004377
(87) Internationale Veröffentlichungsnummer: WO 2004/097877

(56) Entgegenhaltungen:
- DE-A- 19 732 650
- DE-C- 10 203 710
- US-A- 2 924 147
- US-A- 4 224 487

## Beschreibung

Die Erfindung betrifft eine pyromechanische Trennvorrichtung nach dem Oberbegriff des Anspruchs 1 (US-A-4,224,487).

Bei Trennvorrichtungen ist es auch bekannt, ein Stützelement in das Gehäuse mit einzusetzen, welches eine Stützfunktion zum Auffangen des Rückdruckes bei der Auslösung des Anzündelements hat. In der Regel besteht dieses Stützelement aus Metall.

Nach dem Stand der Technik wird dieses Stützelement als Einlegeteil in eine Spritzform für das Gehäuse eingelegt und mit dem Gehäuse verspritzt. Dieser Vorgang ist kostenintensiv, da der Einlegeprozess in der Regel manuell erfolgt. Zusätzlich kommen die Kosten für das Einlegeteil selbst hinzu.

Aus der US-A-2,924,147 ist eine pyromechanische Trennvorrichtung zum Durchtrennen einer Halteleine für Ballone bekannt, bei der in einem Gehäuse ein Trennmeißel vorgesehen ist, der durch die Treibgase eines Anzündelements beschleunigbar ist. Das Anzündelement ist mit Anschlussleitungen versehen, die durch eine scheibenförmige Dichtung und eine Bohrung in dem Gehäuse hindurchgeführt sind.

Aus der DE 197 32 650 A1 sind verschiedene Ausführungsformen eines Leitungstrenners bekannt.

Der Erfindung liegt die Aufgabe zu Grunde, einen einfachen und dennoch sicheren Einbau eines Anzündelements in die pyromechanische Trennvorrichtung zu ermöglichen.

Erfindungsgemäß wird diese Aufgabe durch die Merkmale des Anspruchs 1 gelöst. Das Dichtungselement dient als axialer Toleranzausgleich für das Anzündelement und stellt gleichzeitig eine Dichtfunktion gegen Eindringen von Feuchtigkeit dar.

Das Gehäuse besteht vorzugsweise aus einem hochfesten isolierenden Material, bevorzugt einem Kunststoff, welchem zur mechanischen Versteifung Glasfasern oder Kohlenstofffasern beigemischt sein können.

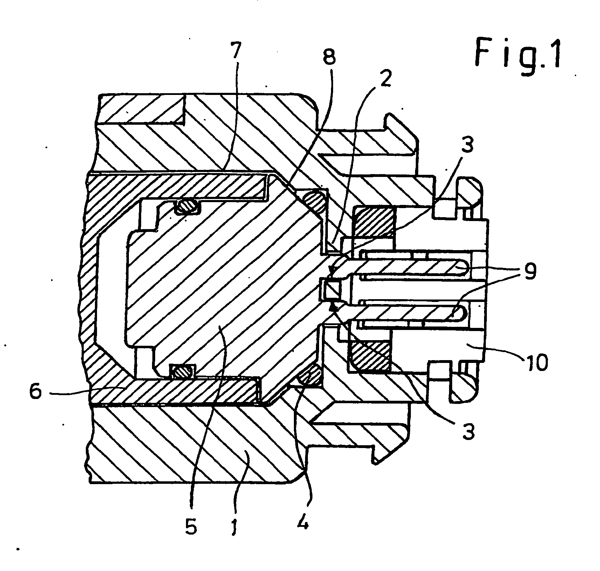

Nachfolgend wird die Erfindung an Hand von Figur 1 näher erläutert.

Figur 1 zeigt einen Ausschnitt aus einer pyromechanischen Trennvorrichtung, die für einen Batterieabschaltung in einem Kraftfahrzeug verwendet werden kann.

In einem Gehäuse 1 aus einem hochfesten isolierenden Material, welchem zur Versteifung Glasfasern oder Kohlenstofffasern beigemischt sind, ist ein Aufnahmeraum 7 angeordnet, in dem sich ein Anzündelement 5 befindet, welches bei Initiierung ein Treibgas erzeugt. Dieses Treibgas beschleunigt einen Trennmeißel 6, der wiederum eine im Gehäuse 1 bzw. im Aufnahmeraum 7 angeordnete Stromleiterschiene (nicht gezeigt) an einer Trennstelle durchtrennt.

Das Anzündelement 5 stützt sich an einem Stützboden 2 des Aufnahmeraums 7 ab, wobei das Anzündelement 5 zwei Anschlusspins 9 aufweist, die den Stützboden 2 an zwei Durchgangsbohrungen 3 durchragen. Von außen sind die Anschlusspins 9 mit einem Stecker 10 verbunden.

Zwischen dem Anzündelement 5 und dem Stützboden 2 ist ein elastisches Dichtungselement 4 angeordnet, welches als axialer Toleranzausgleich für das eingesetzte Anzündelement 5 dient. Zugleich stellt dieses Dichtungselement 4 eine Dichtfunktion gegen Eindringen von Feuchtigkeit dar.

Wie in Figur 1 gezeigt, ist dieses Dichtungselement 4 ein O-Ring, der sich an einer konischen Flanke 8 des Anzündelements 5 und dem Stützboden 2 abstützt.

## Patentansprüche

1. Pyromechanische Trennvorrichtung, insbesondere zur Batterieabschaltung in einem Kraftfahrzeug, mit einem Gehäuse (1), in dem eine Stromleiterschiene angeordnet ist, die von einem Trennmeißel (6) an einer Trennstelle durchtrennbar ausgebildet ist, wobei der Trennmeißel (6) durch die Treibgase eines Anzündelements (5) beschleunigbar ist und das Anzündelement (5) elektrische Anschlusselemente (9) aufweist, in einen Aufnahmeraum (7) im Gehäuse (1) eingesetzt ist, und sich an einem Stützboden (2) dieses Aufnahmeraums (7) abstützt,
**dadurch gekennzeichnet,**
**dass** die elektrischen Anschlusselemente Anschlusspins (9) sind, die den Stützboden (2) an zwei Durchgangsbohrungen (3) durchragen, und
**dass** zwischen dem Anzündelement (5) und dem Stützboden (2) ein elastisches Dichtungselement (4) in Form eines O-Ringes angeordnet ist, der sich an einer konischen Flanke (8) des Anzündelementes (5) und an dem Stützboden (2) abstützt.

2. Trennvorrichtung nach Anspruch 1,
**dadurch gekennzeichnet, dass**
das Gehäuse (1) aus einem Kunststoff besteht, welchem zur mechanischen Versteifung Glasfasern oder Kohlenstofffasern beigemischt sind.

## Claims

1. Pyromechanical disconnecting device, in particular for disconnecting the battery in a motor vehicle, with a housing (1), in which a current conductor rail is arranged, which is configured to be able to be cut through by a cutting chisel (6) at a disconnecting point, wherein the cutting chisel (6) can be accelerated by the propellant gases of an ignition element (5) and the ignition element (5) has electrical connecting elements (9), is inserted into a receiving space (7) in the housing (1) and is supported on a supporting bottom (2) of this receiving space (7),
**characterised in that**
the electrical connecting elements are connecting pins (9) which project through the supporting bottom (2) at two passage bores (3), and **in that** an elastic sealing element (4) is arranged between the ignition element (5) and the supporting bottom (2) in the form of an O ring which is supported at a conical flank (9) of the ignition element (5) and at the supporting bottom (2).

2. Disconnecting device in accordance with claim 1, **characterised in that** the housing (1) consists of a plastic to which glass fibres or carbon fibres are mixed for mechanical stiffening.

## Revendications

1. Dispositif sectionneur pyromécanique, en particulier pour la coupure de la batterie dans un véhicule automobile, comprenant un boîtier (1) dans lequel est disposé une barrette conductrice de courant configurée de manière à pouvoir être sectionnée par un ciseau sectionneur (6), le ciseau sectionneur (6) pouvant être accéléré par les gaz propulseurs d'un élément amorce (5), et l'élément amorce (5) comprenant des éléments connecteurs électriques (9), et étant monté dans un espace récepteur (7) ménagé dans le boîtier (1), et s'appuyant sur un fond d'appui (2) de cet espace récepteur (7),
**caractérisé en ce que** les éléments connecteurs électriques sont des broches de connexion (9) qui traversent le fond d'appui (2) par deux perçages débouchants (3),
et **en ce qu'**un élément d'étanchéité élastique (4) est disposé entre l'élément amorce (5) et le fond d'appui (2), se présentant sous forme d'un joint torique, qui prend appui sur un flanc conique (8) de l'élément amorce (5) et sur le fond d'appui (2).

2. Dispositif sectionneur selon la revendication 1, **caractérisé en ce que** le boîtier (1) est réalisé en une matière plastique additionnée de fibres de verre ou de fibres de carbone en vue d'en augmenter la rigidité mécanique.
